# EUROPÄISCHE PATENTSCHRIFT

(11) **EP 2 186 304 B1**
(45) Veröffentlichungstag und Bekanntmachung des Hinweises auf die Patenterteilung: **15.06.2011**
(21) Anmeldenummer: 07802118.5
(22) Anmeldetag: 04.09.2007
(51) Int. Cl.: H04M 1/06, H04M 1/82

(54) **VERFAHREN UND KOMMUNIKATIONSENDGERÄT ZUR DETEKTION DES STATUS' EINES TELEFONHÖRERS**
METHOD AND COMMUNICATION TERMINAL FOR DETECTING THE STATUS OF A TELEPHONE RECEIVER
PROCÉDÉ ET TERMINAL DE COMMUNICATION PERMETTANT DE DÉTECTER LE STATUT D'UN COMBINÉ TÉLÉPHONIQUE

(43) Veröffentlichungstag der Anmeldung: 19.05.2010
(73) Patentinhaber: Siemens Enterprise Communications GmbH & Co. KG, 81379 München (DE)
(72) Erfinder: BRASSE, Oliver, 58452 Witten (DE); HARDEBUSCH, Ulrich, 46397 Bocholt (DE)
(74) Vertreter: Fritzsche, Thomas
(86) Internationale Anmeldenummer: PCT/EP2007/007706
(87) Internationale Veröffentlichungsnummer: WO 2009/030256

(56) Entgegenhaltungen:
- WO-A-85/00948
- WO-A-2005/096600
- DE-A1- 19 644 841
- US-A- 5 835 585

## Beschreibung

Die Erfindung betrifft ein Verfahren zur Detektion des Status' eines Telefonhörers gemäß dem Oberbegriff des Patentanspruchs 1, und ein Kommunikationsendgerät mit einem Telefonhörer.

Kommunikationsendgeräte (Telefone o. ä.) für Sprachkommunikation sind in der Regel mit Telefonhörern (häufig auch als "Handapparate" bezeichnet) ausgestattet, welche über einen Lautsprecher (Hörkapsel) und ein Mikrophon (Sprechkapsel) verfügen und mittels einer Anschlussleitung oder per Funk mit einem Basisgerät (dem eigentlichen Kommunikationsendgerät) oder einer Basisstation verbunden sind. Weiterhin können auch andere Bestandteile des Kommunikationsendgerätes in einem Telefonhörer integriert sein, beispielsweise Tastatur, Anzeigevorrichtung etc., so dass gebräuchliche schnurlose Telefone oder Mobiltelefone hier ebenfalls Telefonhörer im weiteren Sinne darstellen. Ebenso zählen sog. "Headsets" in schnurgebundener oder schnurloser ("Bluetooth-Headsets") Ausführung zu den Telefonhörern im Sinne des nachfolgend beschriebenen Verfahrens.

Neben der Funktion als Mikrophon und Lautsprecher wird mittels eines Telefonhörers zumindest bei den gebräuchlichen schnurgebundenen Kommunikationsendgeräten (Tischtelefone) auch die Annahme (Rufannahme) und die Beendigung einer Kommunikationsverbindung mittels des Telefonhörers gesteuert, indem dieser von dem Basisgerät des Kommunikationsendgerätes abgenommen bzw. auf dieses aufgelegt wird. Dazu ist das Kommunikationsendgerät (Basisgerät) in der Regel mit einem so genannten Gabelumschalter, einer Lichtschranke oder mit einem Magnetschalter ("Reed-Kontakt") ausgestattet, um den Status (Aufgelegt, Abgehoben) des Telefonhörers zu erfassen. Es sind weiterhin Ausführungsformen bekannt, bei denen ein Druckschalter in die Oberfläche des Telefonhörers integriert ist, mit dem erfasst wird, ob der Telefonhörer auf einer Tischplatte o. ä. aufliegt oder nicht. Bei den schnurlosen Telefonen und Mobiltelefonen wird die Funktion des Gabelumschalters meist durch eine oder mehrere Drucktasten nachgebildet, wobei ein Benutzer für eine Rufannahme bzw. zur Beendigung einer Kommunikationsverbindung eine entsprechende Eingabe tätigt. Dazu ist zu bemerken, dass bei den zuerst genannten Ausführungsformen (Gabelumschalter, Lichtschranke) die entsprechende technische Einrichtung (Gabel, Lichtschranke) auch manuell betätigt werden kann, also beispielsweise mit einem Finger oder einer Hand, ohne dass der Telefonhörer tatsächlich aufgelegt werden muss.

Bei den bekannten Einrichtungen zur Erfassung des Status' von Telefonhörern (und damit auch der mobilen Kommunikationsendgeräte) hat sich als nachteilig erwiesen, dass mechanisch und/oder elektrisch aufwändige Systeme zur Detektion des Status' eingesetzt werden müssen. Das gilt sowohl für die mechanisch ausgeführten Gabelumschalter als auch für die "elektronischen" Lösungen mit Drucktasten, Lichtschranken, Magnetkontakten o. ä. Ein weiterer Nachteil besteht darin, dass die erwähnten Einrichtungen (Gabelumschalter, Lichtschranke, etc.) oft auch manuell bedient werden können, wodurch z. B. der Status "Aufgelegt" irrtümlich auch dann festgestellt werden kann, wenn sich der Telefonhörer oder das mobile Endgerät noch am Ohr des Benutzers befindet.

In der Druckschrift US 5 835 585 A ist der Auflagezustand eines Telefonhörers eines Telefonapparates beschrieben, der in einem Strahlungsfeld z.B. Lichtstrahl, außerhalb des Telefon-Grundgerätes angeordnet ist. Der Telefonhörer ist in diesem Strahlungsfeld außerhalb des Telefon-Grundgerätes bei aufliegendem Hörerzustand auf dem Telefon-Grundgerät aufgelegt. Ein abgenommener Zustand des Telefonhörers wird dadurch signalisiert, dass dieser Telefonhörer aus diesem Strahlungsfeld durch Wegnahme von dem Telefon-Grundgerät entfernt wird.

Es ist also eine Aufgabe der vorliegenden Erfindung, ein Verfahren und eine Anordnung vorzuschlagen, bei der ein Status eines Telefonhörers mit konstruktiv einfachen Mitteln und sicher erfasst werden kann.

Die Aufgabe wird durch ein Verfahren gemäß Patentanspruch 1 und durch ein Kommunikationsendgerät gemäß Patentanspruch 12 gelöst.

Die Lösung der Aufgabe sieht dabei ein Verfahren zur Detektion des Status' eines Telefonhörers für ein Kommunikationsendgerät vor, wobei der Telefonhörer mit einem Mikrophon und mit einem Lautsprecher ausgestattet ist. Dabei wird über den Lautsprecher des Telefonhörers ein definiertes Tonsignal ausgegeben und dieses Tonsignal wird gleichzeitig über das Mikrophon des Telefonhörers wieder aufgenommen. Danach wird das aufgenommene Tonsignal analysiert, wobei zumindest ein Wert für zumindest ein Parameter des aufgenommen Tonsignals ermittelt wird, und wobei anhand des zumindest einen Wertes der Status des Telefonhörers bestimmt wird.

Durch dieses Verfahren ist es möglich, die in einem modernen Kommunikationsendgerät ohnehin vorhandene Technik (Signalverarbeitung) zur Detektion des Status' des Telefonhörers zu verwenden, ohne dass Gabelumschalter, Lichtschranken oder ähnliche technische Einrichtungen vorgesehen werden müssen. Außerdem hat das Verfahren den Vorteil, dass das Kommunikationsendgerät nicht durch manuelles Niederdrücken des Gabelumschalters oder durch manuelles Blockieren einer Lichtschranke o. ä. manipuliert werden kann, so dass der somit festgestellte Status zuverlässig ist.

Die Lösung der Aufgabe sieht weiter ein Kommunikationsendgerät mit einem Telefonhörer vor, wobei das Kommunikationsendgerät zur Durchführung des erfindungsgemäßen Verfahrens ausgestaltet ist. Ein solches Kommunikationsendgerät kann auf eine konstruktiv und vor allem mechanisch einfache Weise sicher zur Erkennung/Bestimmung des Status' des Telefonhörers eingesetzt werden. Dies gilt auch für die Fälle, in denen das Kommunikationsendgerät zusammen mit dem Telefonhörer eine Baueinheit darstellt, beispielsweise bei Mobiltelefonen und schnurlosen Telefonen.

Vorteilhafte Ausgestaltungen des erfindungsgemäßen Verfahrens sind in den abhängigen Patentansprüchen 2 bis 11 angegeben; die dabei beschriebenen Merkmale und Vorteile gelten sinngemäß auch für das erfindungsgemäße Kommunikationsendgerät. Umgekehrt gelten die in den abhängigen Patentansprüchen 13 und 14 für das Kommunikationsendgerät erwähnten vorteilhaften Ausgestaltungen, deren Merkmale und Vorteile sinngemäß auch für das erfindungsgemäße Verfahren.

An dem Kommunikationsendgerät kann ein Gabelumschalter eingespart oder ergänzt werden, wenn für den Status des Telefonhörers zumindest zwischen aufgelegtem und abgehobenem Telefonhörer unterschieden wird. Dabei wird vorteilhaft für den Fall des aufgelegten Telefonhörers ein Gehäuse des Kommunikationsendgerätes, auf dem der Telefonhörer aufliegt, oder ein in dieses Gehäuse integrierter separater akustischer Kanal für die Übertragung des Tonsignals von dem Lautsprecher zu dem Mikrophon des Telefonhörers maßgeblich verwendet. Durch die Übertragung des Tonsignals ergibt sich eine definierte Beeinflussung des Tonsignals in dem akustischen Kanal (Übertragungsstrecke), wodurch der ermittelte Wert bei aufgelegtem Telefonhörer in engen Grenzen gut reproduzierbar ist. Dadurch ist eine sichere Bestimmung des Status' (Aufgelegt) möglich. Dabei kann die Übertragungsfunktion des akustischen Kanals umso genauer bestimmt werden, je mehr unterschiedliche Tonsignale zeitlich nacheinander oder auch gleichzeitig übertragen und analysiert werden.

Analog zur Detektion des Status' "Aufgelegt"/"nicht Aufgelegt" kann für den Status des Telefonhörers zwischen einem Anliegen und einem Nicht-Anliegen an einem menschlichen Körper, beispielsweise im Bereich Gesicht/Ohr, unterschieden werden.

Ein wichtiger Einsatzbereich des Verfahrens ist gegeben, wenn das Verfahren vor der Signalisierung eines an dem Kommunikationsendgerät eingehenden Rufes mittels eines Tonrufes ("Klingelton") durchgeführt wird, wobei die Ausgabe des Tonrufes ("Klingelton") über den Lautsprecher des Telefonhörers erfolgt, und wobei die Ausgabe des Tonrufes anhand des detektierten Status' des Telefonhörers gesteuert wird. So kann mit dem Verfahren verhindert werden, dass der laute Tonruf dann abgegeben wird, wenn der Telefonhörer bzw. dessen Lautsprecher an dem Ohr eines Benutzers anliegt, wodurch - je nach Lautstärke - Hörschäden entstehen könnten. Damit ist es durch diese Maßnahme möglich, einen separaten Lautsprecher/Summer/Glocke o. ä. im Gehäuse des Kommunikationsendgerätes einzusparen, und stattdessen den ohnehin vorhandenen Lautsprecher des Telefonhörers zur Ausgabe des Tonrufes zu verwenden. Dabei wird vorteilhaft in den Fällen, in denen der Status des Telefonhörers als "Abgehoben" oder sogar als "an einem menschlichen Körper anliegend" detektiert wird, die Ausgabe des Tonrufes mit einer verminderten (Hörschutz) oder mit einer ansteigenden (Warnfunktion) Lautstärke durchgeführt, oder die Signalisierung des eingehenden Rufes erfolgt lautlos. Alternativ kann in diesen Fällen auch ein in den Telefonhörer integrierter "Vibrationsalarm" verwendet werden.

Zur Einsparung eines Gabelumschalters oder einer ähnlichen technischen Einrichtung wird das Verfahren vorteilhaft zur Detektion einer Änderung des Status' des Telefonhörers verwendet, wobei in den Fällen, in denen ein "Abheben" (also eine Statusänderung von "Aufgelegt" nach "Abgehoben") detektiert wird, eine Annahme eine signalisierten Rufes durchgeführt wird.

Zur Analyse des aufgenommenen Tonsignals wird für eine einfache Verarbeitung der zumindest eine ermittelte Wert mit einem oder mehreren abgespeicherten Referenzwerten verglichen, wobei vorteilhaft anhand desjenigen Referenzwertes, der dem ermittelten Wert am nächsten liegt, der Status bestimmt wird. Für die einmalige oder auch für die wiederkehrende Ermittlung und Speicherung des Referenzwertes oder der Referenzwerte wird das Kommunikationsendgerät mit dem Telefonhörer in einen Lernmodus umgeschaltet, wobei zumindest einmal ein Tonsignal über den Lautsprecher des Telefonhörers ausgegeben und dieser über das Mikrophon des Telefonhörers aufgenommen und analysiert wird, wobei der zumindest eine dabei ermittelte Wert zur Generierung eines oder mehrerer der Referenzwerte oder von Referenzwert-Bereichen verwendet wird. Dabei ist der Referenzwert oder sind die Referenzwerte charakteristisch für den jeweils verwendeten akustischen Kanal (also die Übertragungsstrecke). Deshalb kann vorteilhaft auch für verschiedene Stati (Aufgelegt, Abgehoben, Hörer am menschlichen Kopf) jeweils ein Referenzwert oder ein Satz Referenzwerte ermittelt werden. Als Parameter wird dabei vorteilhaft die Lautstärke des aufgenommenen Tonsignals und somit die Dämpfung des akustischen Kanals bestimmt; eine weitere oder zusätzliche Möglichkeit besteht darin, als Parameter einen Wert für die "Zero-Crossing-Rate" des mit dem Mikrophon aufgenommenen Tonsignals zu ermitteln. Solche Werte lassen sich auch mit einfachen Signalprozessoren, die in vielen Kommunikationsendgeräten ohnehin verbaut sind, mit wenig Rechenaufwand ermitteln.

Um eine Störung eines Benutzers durch das Tonsignal zu minimieren oder zu vermeiden, kann als das Tonsignal ein als wenig störend empfundener Ton, beispielsweise ein Rauschsignal, ausgegeben werden; dieses lässt sich beispielsweise durch eine schnelle Fourier-Transformation (FFT) auswerten. Außerdem kann- je nach Übertragungsbereich des Mikrophons und des Lautsprechers - auch ein Ultraschallsignal oder ein Infraschallsignal verwendet werden. Durch diese Maßnahmen ist es möglich, den Status des Telefonhörers periodisch oder dauerhaft auch während eines Telefongesprächs zu überwachen, so dass ein "Auflegen" des Telefonhörers erkannt werden kann, wodurch die Kommunikationsverbindung (Telefongespräch) beendet werden kann. Auch eine Lautstärkenanpassung bei der Wiedergabe des Telefongesprächs ist somit möglich, so dass je nach Abstand des Telefonhörers zum menschlichen Ohr sogar stufenlos in einen "Freisprech-Modus" gewechselt werden kann. Umgekehrt kann selbstverständlich bei einer Annäherung des Telefonhörers and das Gesicht/Ohr eines Benutzers die Wiedergabe-Lautstärke gesenkt werden.

Ausführungsbeispiele des erfindungsgemäßen Verfahrens werden nachfolgend anhand der Zeichnungen erläutert. Diese gleichzeitig der Erläuterung eines erfindungsgemäßen Kommunikationsendgerätes.

Dabei zeigen:
- Figur 1: einen Telefonhörer mit dem Status "Abgehoben",
- Figur 2: einen Telefonhörer, der auf dem Gehäuse eines Kom- munikationsendgerätes aufgelegt ist, und
- Figur 3: in schematischer Darstellung einen Ablauf des Ver- fahrens zur Detektion des Status' eines Telefonhö- rers.

Im Folgenden wird am Beispiel eines Tischtelefons als Kommunikationsendgerät EG die Detektion des Status' eines Telefonhörers H erläutert. Grundsätzlich kann jedoch mit dem erläuterten Verfahren auch der Status eines Mobiltelefons o.ä. erfasst werden, wobei in diesem Fall sich der Status "Aufgelegt" nicht auf das Aufliegen auf einem Telefon bezieht, sondern auf einer Tischplatte oder einer speziellen Halterung.

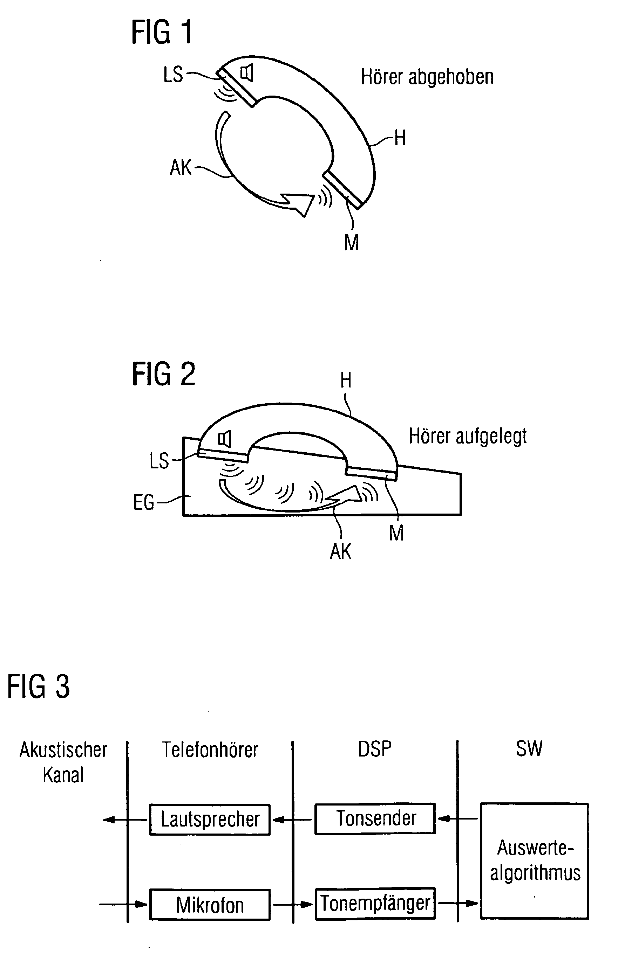

In den Figuren 1 und 2 sind der Telefonhörer H und das Kommunikationsendgerät EG schematisch dargestellt; Details wie Hörerschnur, Tastatur, Display, etc. sind aus Gründen der Übersichtlichkeit nicht dargestellt.

In der Figur 1 ist ein Telefonhörer H dargestellt, der über einen Lautsprecher LS (Hörkapsel) und ein Mikrophon M (Sprechkapsel) verfügt. Der Lautsprecher LS und das Mikrophon M werden in der hier dargestellten Ausführungsform sowohl für die eigentliche Funktion des Telefonhörers, nämlich für das eigentliche Telefongespräch, als auch für die Durchführung des erläuterten Verfahrens (Statuserkennung) verwendet. Obwohl diese Vorgehensweise bewirkt, dass für die Durchführung des Verfahrens keine separate "Hardware" für die Durchführung des Verfahrens in den Telefonhörer eingebaut werden muss, ist es selbstverständlich auch möglich, einen separaten Lautsprecher LS und/oder Mikrophon M für diesen Zweck zu verwenden.

Schallwellen (Tonsignale, etc.), die vom Lautsprecher LS des Telefonhörers H wiedergegeben werden, werden zumindest teilweise von dem Mikrophon M des Telefonhörers H wieder aufgenommen. Dies wird auch als akustische Rückkopplung bezeichnet. Der dabei von den Schallwellen durchlaufene Weg wird als akustischer Kanal AK bezeichnet. Im Beispiel der Figur 1, in dem der Telefonhörer H abgehoben ist, kann näherungsweise davon ausgegangen werden, dass der Lautsprecher LS den Schall mit einer halbkugelförmigen Charakteristik abstrahlt, so dass nur ein geringer Teil der Schallwellen auf das Mikrophon M auftrifft. Der akustische Kanal AK besitzt bei diesem Status "Abgehoben" eine relativ hohe akustische Dämpfung, weil eben nur ein geringer Teil der abgestrahlten Schallenergie zu dem Mikrophon M geleitet wird.

In der Figur 2 ist derselbe Telefonhörer H gezeigt, der diesmal jedoch auf dem Kommunikationsendgerät EG aufliegt. Dabei bildet das Gehäuse des Kommunikationsendgerätes EG den akustischen Kanal, wobei ein großer Teil der von dem Lautsprecher LS abgestrahlten Schallenergie (Schallwellen) in dem Gehäuse, vorwiegend auf dem Gehäuseboden, reflektiert wird und so zu dem Mikrophon M geleitet wird. Das Gehäuse des Kommunikationsendgerätes EG bildet dabei einen akustischen Kanal AK, der verglichen mit dem akustischen Kanal aus Figur 1 eine geringere Dämpfung aufweist. Neben der Dämpfung, die sich direkt auf die Lautstärke des von dem Mikrophon M aufgenommenen Schalls auswirkt, weichen auch andere Eigenschaften der akustischen Kanäle in den Figuren 1 und 2 voneinander ab, beispielsweise die Signallaufzeiten und die spektralen Eigenschaften, wobei letzteres bedeutet, dass verschiedene Frequenzbereiche mit einer verschiedenen Dämpfung übertragen werden. Außerdem sind je nach Gestaltung des Gehäuses Resonanzen für unterschiedliche Frequenzen möglich.

Im Ausführungsbeispiel der Figur 2 liegt der Telefonhörer H auf dem Gehäuse des Kommunikationsendgerätes EG auf, so dass die von dem Lautsprecher LS abgestrahlte Schallenergie zunächst auf die Gehäuseoberschale übertragen wird, und von dieser zumindest teilsweise an das Luftvolumen im Inneren des Gehäuses weitergegeben wird, dort in der beschriebenen Weise in denjenigen Gehäusebereich gelangt, auf dem das Mikrophon M aufliegt, und schließlich über das Gehäuse wieder an das Mikrophon M übertragen wird. Ein Teil des Schalls wird auch direkt über das Gehäuse übertragen. Je nach Ausführungsform können an der Stelle, an der der Lautsprecher LS und/oder das Mikrophon M aufliegt, Öffnungen oder eine flexible Membran zur besseren Schallübertragung vorgesehen sein. Außerdem kann im Inneren des Gehäuses ein separater akustischer Kanal ausgeformt oder eingebaut sein, um eine bessere oder andere (möglichst charakteristische) Schallübertragung zu gewährleisten.

Anhand der Figur 3 wird der Vorgang der Detektion nun erläutert. Neben dem ("umweltabhängigen") akustischen Kanal AK und dem Telefonhörer H als Ein- und Ausgabemedium für Schallwellen (Tonsignale) werden dabei ein digitaler Signalprozessor DSP und die diesen steuernde Software SW des Kommunikationsendgerätes EG betrachtet, wobei hier davon ausgegangen wird, dass der digitale Signalprozessor DSP und eine (hier nicht dargestellte) Mikroprozessorsteuerung ohnehin in den meisten modernen Kommunikationsendgeräten EG vorhanden sind.

Bei einem bei dem Kommunikationsendgerät eingehenden Ruf soll ein Tonruf ("klingen") für die Signalisierung verwendet werden, wobei dieser Tonruf über den Lautsprecher LS des Telefonhörers H ausgegeben werden soll. Auf diese weise soll ein separater Lautsprecher, Summer, Glocke, o. ä. eingespart werden. Die Mikroprozessorsteuerung des Kommunikationsendgerätes EG stellt fest, dass sich das Kommunikationsendgerät EG im Ruhezustand befindet, also zur Signalisierung und Annahme des Rufes grundsätzlich bereit ist. Es muss jedoch sichergestellt werden, dass der Telefonhörer H auf dem Gehäuse aufliegt. Dazu übermittelt ein Steuerungsprogramm eine Befehlsfolge an den digitalen Signalprozessor DSP, mit der dieser die Funktion eines Tonsenders übernimmt und ein Tonsignal erzeugt, beispielsweise einen Sinuston mit 440 Hz, wobei dieser Ton mit einer definierten Lautstärke, beispielsweise 25dB, von dem Lautsprecher LS ausgegeben wird. Nach Durchlaufen des akustischen Kanals AK, hier: Gehäuse des Kommunikationsendgerätes EG, wird das Tonsignal von dem Mikrophon M aufgenommen und wiederum dem digitalen Signalprozessor DSP zugeführt, der das aufgenommene Tonsignal einer Analyse unterzieht und als Parameter die Lautstärke (Pegel) feststellt, hier beispielsweise 23dB. Dieser Wert für den Parameter "Lautstärke" wird mit einer in dem Kommunikationsendgerät EG gespeicherten Tabelle verglichen, wobei festgestellt wird, dass beispielsweise Werte zwischen 22dB und 24dB charakteristisch für das Aufliegen des Telefonhörers H sind, so dass der Tonruf ohne eine Gefahr für ein menschliches Gehör über den Lautsprecher LS des Telefonhörers H ausgegeben werden kann.

Üblicherweise wird das vom Mikrophon M aufgenommene Tonsignal zunächst gefiltert; in diesem Ausführungsbeispiel mit einem steilen Bandpaßfilter bei 440 Hz "Eckfrequenz". Diese Filterung kann digital durch den DSP durchgeführt werden. Neben oder anstelle der Dämpfung kann als Parameter auch die sog. "Zero-Crossing-Rate", also der Anteil der Signal-Nulldurchgänge, erfasst werden; dieser Wert kann auch durch einfache Signalprozessoren (DSP) leicht erfasst werden.

Bei einer anderen Situation kann es durchaus sein, dass der Telefonhörer H nicht richtig auf dem Kommunikationsendgerät EG aufliegt, so dass, beispielsweise bei der Situation aus der Figur 1, ein Wert von 19dB gemessen wird, was zur Folge hat, dass eine Ausgabe des Tonrufes mit einer gedämpften Lautstärke oder überhaupt nicht erfolgt.

Die Detektion des Zustandes kann (nahezu) unhörbar und damit auch während eines Telefongespräches durchgeführt werden, wenn als das Tonsignal Ultraschall oder Infraschall verwendet wird. Auch die Beschränkung auf kurze Messungen ("Ton-Bursts") und auf geringe Signalamplituden (Lautstärke) trägt dazu bei. Schließlich kann als Tonsignal während eines Gespräches auch der vom Lautsprecher LS wiedergegebene "Nutzinhalt" des Gespräches verwendet werden. In diesem Fall wird das über den Lautsprecher LS ausgegebene akustische Signal mit dem vom Mikrophon M aufgenommenen Signal verglichen, woraus z.B. der Grad der akustischen Rückkopplung (und damit die Dämpfung) ermittelt werden kann. Dabei können ausgewählte Frequenzbereiche analysiert werden, beispielsweise die bekannten Resonanzfrequenzen, die bei einer akustischen Rückkopplung über das Gehäuse des Kommunikationsendgerätes EG auftreten.

Zur Einprogrammierung der Vergleichswerte in die Tabelle für den Auswertealgorhythmus lässt sich ein so genannter "Lernmodus" aktivieren, bei dem über eine Menüsteuerung o. ä eine Eingabe über den tatsächlichen Status des Telefonhörers H gemacht wird, wonach testweise das Tonsignal ausgegeben wird und der dabei gemessene Wert für den Parameter (hier z.B. Dämpfung bzw. Lautstärke) in die Tabelle eingetragen wird. Dabei wird berücksichtigt, dass Messungenauigkeiten und situationsbezogene Ungenauigkeiten auftreten können, so dass auch bei später leicht abweichenden Werten eine Erkennung des Status' gegeben ist.

Neben der Messung der Lautstärke und damit der Dämpfung des akustischen Kanals können auch andere Parameter erfasst werden, beispielsweise können Resonanzen bestimmt werden, indem ein Mehrfrequenzsignal oder ein Rauschsignal als Tonsignal verwendet wird und durch den digitalen Signalprozessor DSP eine schnelle Fourier-Transformation (FFT-Fast Fourier Transformation) zur Ermittlung von Resonanzfrequenzen durchgeführt wird. Auf die gleiche Weise kann nicht nur zwischen dem Status "Aufgelegt" und "Abgehoben" differenziert werden, sondern auch beispielsweise der Fall, dass der Telefonhörer H bzw. dessen Lautsprecher LS an einem Kopf/Ohr anliegt, wodurch beispielsweise das ausgegebene Tonsignal in erhöhtem Maße einer Dämpfung unterworfen ist. Außerdem können Zustandsänderungen erfasst werden, in denen wiederholt eine Detektion des Status' durchgeführt wird, wodurch teilweise oder ganz ein Gabelumschalter oder eine Lichtschranke o. ä eingespart werden kann.

## Patentansprüche

1. Verfahren zur Detektion des Status' eines Telefonhörers (H) für ein Kommunikationsendgerät (EG),
wobei der Telefonhörer (H) mit einem Mikrophon (M) und mit einem Lautsprecher (LS) ausgestattet ist,
**dadurch gekennzeichnet, dass**
- über den Lautsprecher (LS) des Telefonhörers (H) ein definiertes Tonsignal ausgegeben wird,
- dieses Tonsignal gleichzeitig über das Mikrophon (M) des Telefonhörers (H) wieder aufgenommen wird,
- das aufgenommene Tonsignal analysiert wird, wobei zumindest ein Wert für zumindest einen Parameter des aufgenommenen Tonsignals ermittelt wird, und
- anhand des zumindest einen Wertes der Status des Telefonhörers (H) bestimmt wird.

2. Verfahren nach Patentanspruch 1,
**dadurch gekennzeichnet, dass**
für den Status des Telefonhörers (H) zumindest zwischen aufgelegtem und abgehobenem Telefonhörer (H) unterschieden wird.

3. Verfahren nach Patentanspruch 2,
**dadurch gekennzeichnet, dass**
für den Fall des aufgelegten Telefonhörers (H) ein Gehäuse des Kommunikationsendgerätes (EG), auf dem der Telefonhörer (H) aufliegt, oder ein in dieses Gehäuse integrierter separater akustischer Kanal für die Übertragung des Tonsignals von dem Lautsprecher (LS) zu dem Mikrophon (M) des Telefonhörers (H) maßgeblich verwendet wird.

4. Verfahren nach einem der vorherigen Patentansprüche,
**dadurch gekennzeichnet, dass**
für den Status des Telefonhörers (H) zwischen einem Anliegen und einem Nicht-Anliegen an einem menschlichen Körper unterschieden wird.

5. Verfahren nach einem der vorhergehenden Patentansprüche,
**dadurch gekennzeichnet, dass**
das Verfahren vor der Signalisierung eines Rufes mittels eines Tonrufes an einem Kommunikationsgerät mit dem Telefonhörer (H) durchgeführt wird, wobei die Ausgabe des Tonrufes über den Lautsprecher (LS) des Telefonhörers (H) anhand des detektierten Status' des Telefonhörers (H) gesteuert wird.

6. Verfahren nach Patentanspruch 5,
**dadurch gekennzeichnet, dass**
in den Fällen, in denen der Status des Telefonhörers (H) als "abgehoben" oder als "an einem menschlichen Körper anliegend" detektiert wird, die Ausgabe des Tonrufes mit einer verminderten oder mit einer ansteigenden Lautstärke erfolgt, oder die Signalisierung lautlos erfolgt.

7. Verfahren nach einem der vorhergehenden Patentansprüche,
**dadurch gekennzeichnet, dass**
das Verfahren zur Detektion einer Änderung des Status' des Telefonhörers (H) verwendet wird, wobei in den Fällen, in denen ein "Abheben" des Telefonhörers (H) detektiert wird, eine Annahme eines signalisierten Rufes durchgeführt wird.

8. Verfahren nach einem der vorhergehenden Patentansprüche,
**dadurch gekennzeichnet, dass**
zur Analyse des aufgenommenen Tonsignals der zumindest eine ermittelte Wert mit einem oder mehreren abgespeicherten Referenzwerten verglichen wird.

9. Verfahren nach Patentanspruch 8,
**dadurch gekennzeichnet, dass**
für die Ermittlung und Speicherung des Referenzwertes oder der Referenzwerte das Kommunikationsendgerät (EG) mit dem Telefonhörer (H) in einen Lernmodus umgeschaltet wird, wobei zumindest einmal ein Tonsignal über den Lautsprecher (LS) des Telefonhörers (H) ausgegeben und dieses über das Mikrophon (M) des Telefonhörers (H) aufgenommen und analysiert wird, wobei der zumindest eine dabei ermittelte Wert zur Generierung eines oder mehrerer der Referenzwerte verwendet wird.

10. Verfahren nach einem der vorhergehenden Patentansprüche,
**dadurch gekennzeichnet, dass**
als der zumindest eine Parameter die Lautstärke des aufgenommenen Tonsignals verwendet wird.

11. Verfahren nach einem der vorhergehenden Patentansprüche,
**dadurch gekennzeichnet, dass**
als für zumindest einen der Parameter ein Wert für die die Zero-Crossing-Rate des mit dem Mikrophon (M) aufgenommenen Tonsignals ermittelt wird.

12. Kommunikationsendgerät (EG) mit einem Telefonhörer (H),
**dadurch gekennzeichnet, dass**
das Kommunikationsendgerät (EG) zur Durchführung eines der Verfahren gemäß Patentanspruch 1 bis 11 ausgestaltet ist.

13. Kommunikationsendgerät (EG) gemäß Patentanspruch 12,
**dadurch gekennzeichnet, dass**
das Kommunikationsendgerät (EG) zur Signalisierung eines eingehenden Rufes mittels eines über Lautsprecher (LS) des Telefonhörers wiedergegebenen Ruftones ausgestaltet ist.

14. Kommunikationsendgerät (EG) nach einem der Patentansprüche 12 oder 13,
**dadurch gekennzeichnet, dass**
das Kommunikationsendgerät (EG) mittels Einsatz eines der Verfahren zur Ergänzung oder zum Ersatz eines Gabelumschalters ausgestaltet ist.

## Claims

1. Method for detecting the status of a telephone receiver (H) for a communication terminal (EG),
wherein the telephone receiver (H) is equipped with a microphone (M) and with a loudspeaker (LS),
**characterised in that**
- a defined audio signal is emitted via the loudspeaker (LS) of the telephone receiver (H),
- this audio signal is simultaneously received again via the microphone (M) of the telephone receiver (H),
- the received audio signal is analysed, wherein at least one value is determined for at least one parameter of the received audio signal, and
- the status of the telephone receiver (H) is determined on the basis of the at least one value.

2. Method according to claim 1, **characterised in that**, for the status of the telephone receiver (H), a distinction is made between the on-hook and the off-hook telephone receiver (H).

3. Method according to claim 2, **characterised in that**, in the case of the on-hook telephone receiver (H), a housing of the communication terminal (EG), on which the telephone receiver (H) rests, or a separate acoustic channel integrated in this housing is used to transmit the audio signal from the loudspeaker (LS) to the microphone (M) of the telephone receiver (H).

4. Method according to one of the preceding claims, **characterised in that**, for the status of the telephone receiver (H), a distinction is made between bearing against and not bearing against a human body.

5. Method according to one of the preceding claims, **characterised in that** the method is carried out before signalling a call by means of a ringing on a communication terminal comprising the telephone receiver (H), wherein the emission of the ringing via the loudspeaker (LS) of the telephone receiver (H) is controlled on the basis of the detected status of the telephone receiver (H).

6. Method according to claim 5, **characterised in that**, in cases where the status of the telephone receiver (H) is detected as being "off-hook" or as "bearing against a human body", the ringing is emitted with a reduced or with a rising volume, or the signalling takes place without sound.

7. Method according to one of the preceding claims, **characterised in that** the method is used to detect a change in the status of the telephone receiver (H), wherein, in cases where a "lifting" of the telephone receiver (H) is detected, a signalled call is accepted.

8. Method according to one of the preceding claims, **characterised in that**, in order to analyse the received audio signal, the at least one determined value is compared with one or more stored reference values.

9. Method according to claim 8, **characterised in that**, for the determination and storage of the reference value or reference values, the communication terminal (EG) comprising the telephone receiver (H) is switched into a learning mode, wherein an audio signal is emitted at least once via the loudspeaker (LS) of the telephone receiver (H) and said signal is received via the microphone (M) of the telephone receiver (H) and analysed, wherein the at least one value determined in the process is used to generate one or more of the reference values.

10. Method according to one of the preceding claims, **characterised in that** the volume of the received audio signal is used as the at least one parameter.

11. Method according to one of the preceding claims, **characterised in that** a value for the zero-crossing rate of the audio signal received by the microphone (M) is determined as at least one of the parameters.

12. Communication terminal (EG) comprising a telephone receiver (H), **characterised in that** the communication terminal (EG) is designed to carry out one of the methods according to claims 1 to 11.

13. Communication terminal (EG) according to claim 12, **characterised in that** the communication terminal (EG) is designed to signal an incoming call by means of a ringing reproduced via the loudspeaker (LS) of the telephone receiver.

14. Communication terminal (EG) according to one of claims 12 or 13, **characterised in that** the communication terminal (EG), by using one of the methods, is designed to supplement or to replace a hook switch.

## Revendications

1. Procédé de détection de l'état d'un combiné téléphonique (H) pour un terminal de communication (EG), le combiné téléphonique (H) étant équipé d'un microphone (M) et d'un haut-parleur (LS),
**caractérisé en ce que**
- un signal sonore défini est émis par le biais du haut-parleur (LS) du combiné téléphonique (H),
- ce signal sonore est capté de nouveau simultanément par le biais du microphone (M) du combiné téléphonique (H),
- le signal sonore capté est analysé, au moins une valeur étant déterminée pour au moins un paramètre du signal sonore capté, et
- l'état du combiné téléphonique (H) est défini à l'aide de la ou des valeurs.

2. Procédé selon la revendication 1,
**caractérisé en ce que**
pour l'état du combiné téléphonique (H), on fait au moins la différence entre combiné téléphonique (H) raccroché et combiné téléphonique (H) décroché.

3. Procédé selon la revendication 2,
**caractérisé en ce que**
pour le cas du combiné téléphonique (H) raccroché, un boîtier du terminal de communication (EG), sur lequel repose le combiné téléphonique (H), ou un canal acoustique séparé intégré dans ce boîtier est employé de manière déterminante pour la transmission du signal sonore du haut-parleur (LS) au microphone (M) du combiné téléphonique (H).

4. Procédé selon l'une quelconque des revendications précédentes,
**caractérisé en ce que**
pour l'état du combiné téléphonique (H), on fait la différence entre une application et une non-application contre le corps d'une personne.

5. Procédé selon l'une quelconque des revendications précédentes,
**caractérisé en ce que**
le procédé est exécuté avant la signalisation d'un appel au moyen d'une tonalité sur un appareil de communication avec le combiné téléphonique (H), l'émission de la tonalité par le biais du haut-parleur (LS) du combiné téléphonique (H) étant commandée à l'aide de l'état détecté du combiné téléphonique (H).

6. Procédé selon la revendication 5,
**caractérisé en ce que**
dans les cas dans lesquels l'état du combiné téléphonique (H) « décroché » ou « appliqué contre le corps d'une personne » est détecté, l'émission de la tonalité a lieu avec un volume réduit ou avec un volume croissant, ou la signalisation a lieu en silence.

7. Procédé selon l'une quelconque des revendications précédentes,
**caractérisé en ce que**
le procédé est employé pour la détection d'une modification de l'état du combiné téléphonique (H), une acceptation d'un appel signalisé étant exécutée dans les cas dans lesquels un « décrochage » du combiné téléphonique (H) est détecté.

8. Procédé selon l'une quelconque des revendications précédentes,
**caractérisé en ce que**,
pour analyser le signal sonore capté, la ou les valeurs déterminées sont comparées à une ou plusieurs valeurs de référence enregistrées.

9. Procédé selon la revendication 8,
**caractérisé en ce que**
pour la détermination et l'enregistrement de la valeur de référence ou des valeurs de référence, le terminal de communication (EG) avec le combiné téléphonique (H) est commuté dans un mode d'apprentissage, au moins un signal sonore étant émis par le biais du haut-parleur (LS) du combiné téléphonique (H) et ce signal étant capté par le biais du microphone (M) du combiné téléphonique (H) et analysé, la ou les valeurs déterminées à cette occasion étant employées pour générer une ou plusieurs valeurs de référence.

10. Procédé selon l'une quelconque des revendications précédentes,
**caractérisé en ce que**
le volume du signal sonore capté est employé en tant que paramètre(s).

11. Procédé selon l'une quelconque des revendications précédentes,
**caractérisé en ce que**,
pour au moins un des paramètres, une valeur est déterminée pour la vitesse de passage à zéro du signal sonore capté avec le microphone (M).

12. Terminal de communication (EG) ayant un combiné téléphonique (H),
**caractérisé en ce que**
le terminal de communication (EG) est conçu pour exécuter un des procédés selon les revendications 1 à 11.

13. Terminal de communication (EG) selon la revendication 12,
**caractérisé en ce que**
le terminal de communication (EG) est conçu pour la signalisation d'un appel arrivant au moyen d'une tonalité d'appel restituée par le biais du haut-parleur (LS) du combiné téléphonique.

14. Terminal de communication (EG) selon l'une des revendications 12 ou 13,
**caractérisé en ce que**
le terminal de communication (EG) est conçu pour compléter ou remplacer un commutateur de fourche au moyen de la mise en oeuvre d'un des procédés.
